# EUROPEAN PATENT APPLICATION

(11) **EP 1 840 099 A2**
(43) Date of publication of application: **03.10.2007**
(21) Application number: 07475001.9
(22) Date of filing: 30.01.2007
(51) Int. Cl.: C04B 28/12

(54) **Mixture for preparing hydrophobic preparation, procedure of manufacturing thereof and utilization thereof**

(30) Priority: 01.02.2006 SK 50122006
(71) Applicant: Izonil Slovakia, s.r.o., 946 31 Chotin (SK)
(72) Inventor: Balogh, Peter, 945 01 Komárno (SK); Hegedüs, Ondrej, 940 01 Nové Zámky (SK)
(74) Representative: Holoubkova, Maria

(57) **Abstract**

Mixture for preparing hydrophobic preparation, way of preparing hydrophobic preparation and utilization thereof according to the present invention foundation whereof resides in that the mixture is composed of a vegetable oil in amount of 3.0 to 8.0 % of mass, a detergent in amount of 0.15 to 3.5 % of mass and remaining part up to 100 % is represented by powdered quick lime.

The way of preparing hydrophobic preparation resides in that the emulsion of vegetable oil and detergent is added by fine spraying into powdered quick lime under continuous mixing, subsequently water is added under continuous mixing in amount of 40 to 80 % of mass to amount of mentioned mixture. Upon finishing hydration of lime, the mixture is let to dry spontaneously at room temperature.

The hydrophobic preparation can be used as admixture into building materials.

## Description

### Field of the invention

The present intention relates to mixture for preparing hydrophobic preparation, procedure of manufacturing this hydrophobic preparation and utilization thereof.

### Description of the prior art

Nowadays various hydro-insulating substances are used for protection of buildings against water and dampness that are applied during the course of building works or are applied by spreading.

According to the HU patent No. 195 459, the mixture composed of Portland cement, river sand and salts of alkylbenzene-sulfonic acid or alkyl-phenol-polyethyleneglycol ether or alkyl mercaptides or acetate formaldehyde-benzyl-alcohol is used for preparing hydrophobic mortar being applied during the course of building works.

Major group of hydro-insulating preparations applied by spreading is composed of asphalt hydro-insulating substances, in particular water-dilutable asphalt suspension made of modified asphalts.

Another group of these preparations is represented by mixtures of asphalts with mineral, plastic or glass fibres together with another mineral fillers. These preparations are described in the US patent 4,759 799 and the US patent 5, 226 960.

Disadvantage of hydro-insulating preparations applied afterwards by spreading is relatively weak tensile strength thereof and melting and flowing thereof at higher temperatures in case they are applied on sloping and vertical surfaces.

Increasing strengths and elasticity of spread coat can be achieved according to the utility design No. 3515 by hydro-insulating preparation composed of 50 to 90 % of mass by asphalt bentonite suspension containing asphalt modified by ethylenevinylacetate copolymer or thermoplastic caoutchouc, 4 to 45 % of mass by mineral fillers and 0.5 to 10 % of mass by plastic fibres with the length of 0.5 to 12 mm.

The HU patent No. 177 945 describes insulating liquid composed of ethyleneglycol-acetate or diisocyanic synthetic resin in solution of methyl-isobutyl-ketone and toluene. Such prepared liquid is applied into brickwork, it expands by influence of dampness and after overall toughening it forestalls repeated permeation of dampness.

Besides benefits of described hydro-insulating preparations, big disadvantages thereof are negative environmental effects and creating considerable amount of flammable or explosive vapours from solvents applied for modification of brickwork characteristics.

The target of the present invention is an environmentally unobjectionable hydrophobic preparation with good hydrophobic attributes, manufacturing whereof does not require non-standard procedures.

### Disclosure of the invention

Mentioned attributes are met by mixture for preparing hydrophobic preparation, way of preparing hydrophobic preparation and utilization according to the present invention foundation whereof resides in that the mixture is composed of a vegetable oil in amount of 3.0 to 8.0 % of mass, a detergent in amount of 0.15 to 3.5 % of mass and remaining part up to 100 % is represented by powdered quick lime.

It has been proved experimentally, that sunflower oil or colza oil or maize oil can be advantageously used as a vegetable oil.

It has been also proved, that liquid surfactant preparation containing 9 % of active substances extractable by ethanol can be used as a detergent. Also viscid potash soap can be used as a detergent.

The way of preparing hydrophobic preparation from above mentioned mixture resides in adding emulsion of vegetable oil and detergent by fine spraying into powdered quick lime under continuous mixing and subsequently water is added to this mixture under continuous mixing in amount of 40 to 80 % of mass to amount of mentioned mixture and upon finishing hydration of lime, the mixture is let to dry spontaneously at room temperature.

The hydrophobic preparation prepared by described manner from above mentioned mixture can be used as admixture into building materials.

Main advantage of the hydrophobic preparation according to the present invention is its hydrophobic attribute, i.e. forestalling permeation of non-pressure and pressure water into concrete or mortar. The hydrophobic preparation does not have influence on solidifying and hardening of mortar and concrete. Surfaces constructed with using of hydrophobic preparation according to the present invention have heightened frost resistance, while they retain attributes of concrete or plasters.

Another advantage of the hydrophobic preparation is that it forestalls conglutination and clustering of cement during storing and transporting, it eases pouring cement from crates and conveyors, as it improves cement lubricity and prolongs time of cement storing.

The hydrophobic preparation according to the present invention can be utilized in building industry as admixture into building materials designated for insulation of buildings, pools, water reservoirs, concrete tubs, for reconstruction of old buildings plasters etc. Great asset thereof is its simple and easy realizable application directly on building site and environmental friendliness.

### Examples of the invention embodiments

### Example 1

Vegetable oil emulsion in amount of 4.5 % of mass and liquid detergent preparation in amount of 0.2 % mass is added by fine spraying under continuous mixing to powdered quick lime in amount of 95 % of mass. Subsequently water in amount of 50 % of mass to mentioned mixture amount is added to the mixture under continuous mixing. After mixing and completion of reaction accompanied by releasing heat, the mixture is let to dry spontaneously at room temperature.

### Example 2

Vegetable oil emulsion in amount of 4.5 % of mass and potash soap in amount of 1.0 % of mass is added by fine spraying under continuous mixing to powdered quick lime in amount of 95 % of mass. Subsequently water in amount of 50 % of mass to mentioned mixture amount is added to the mixture under continuous mixing. Further procedure is the same as in the example 1.

### Example 3

Cement in amount of 92 % of mass is mixed with 8 % of mass of the mixture prepared according to the example 1. For preparation of cement mortar, 1 portion of mentioned mixture and 3 portions of sand are used.

### Example 4

Cement in amount of 92 % of mass is mixed with 8 % of mass of the mixture prepared according to the example 1. For preparation of concrete, 1 portion of mentioned mixture and 3 portions of aggregate are used.

### Industrial utilization

The hydrophobic preparation according to the present invention can be utilized in particular in building industry as admixture into building materials designated for insulation of buildings, pools, water reservoirs, concrete tubs of bulky sizes, for reconstruction of old buildings etc.

## Claims

1. The mixture for preparing hydrophobic preparation, **characterized in that** the mixture is composed of a vegetable oil in amount of 3.0 to 8.0 % of mass, a detergent in amount of 0.15 to 3.5 % of mass and remaining part up to 100 % is represented by powdered quick lime.

2. The mixture according to the claim 1,**characterized in that** the vegetable oil is sunflower, colza or maize oil.

3. The mixture according to the claim 1,**characterized in that** the detergent is liquid surfactant preparation or viscid potash soap .

4. The mixture according to the claim 1, **characterized in that** the liquid surfactant preparation contains 9 % of active substances extractable by ethanol.

5. The way of preparing the hydrophobic preparation according to claims 1 to 4, **characterized in that** the emulsion of vegetable oil and detergent is added by fine spraying into powdered quick lime under continuous mixing, subsequently water is added to this mixture under continuous mixing in amount of 40 to 80 % of mass to amount of mentioned mixture and upon finishing hydration of lime, the mixture is let to dry spontaneously at room temperature.

6. Utilization of the hydrophobic preparation according to the claim 5 as admixture into building materials.
